(19) Europäisches Patentamt
European Patent Office
Office européen des brevets

(11) EP 4 734 054 A1

(12) **EUROPEAN PATENT APPLICATION**

(43) Date of publication:
29.04.2026 Bulletin 2026/18

(21) Application number: 25210930.1

(22) Date of filing: 24.10.2025

(51) International Patent Classification (IPC):
**G06T 7/12** (2017.01) **G06T 7/162** (2017.01)

(52) Cooperative Patent Classification (CPC):
**G06T 7/12; G06T 7/162;** G06T 2207/10081;
G06T 2207/20081; G06T 2207/20084;
G06T 2207/30061; G06T 2207/30101;
G06T 2207/30172

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.10.2024 JP 2024189213

(71) Applicant: **FUJIFILM Corporation
Tokyo 106-8620 (JP)**

(72) Inventor: **KITAMURA, Yoshiro
Tokyo, 106-8620 (JP)**

(74) Representative: **Dehns Germany Partnerschaft
mbB
Theresienstraße 6-8
80333 München (DE)**

(54) **IMAGE PROCESSING APPARATUS, IMAGE PROCESSING METHOD, AND IMAGE PROCESSING PROGRAM**

(57) An image processing apparatus includes a processor, in which the processor is configured to derive a feature vector for each pixel corresponding to a structure in an image including a plurality of structures, according to a topological distance between the pixels, assign energy to edges between the pixels based on the feature vector, and separate a region of the structure by cutting the edges such that a sum of energies of a plurality of the edges is minimized.

## FIG. 2

**Description**

BACKGROUND

Technical Field

The present disclosure relates to an image processing apparatus, an image processing method, and a non-transitory computer-readable storage medium storing an image processing program.

Related Art

A technology for separating a region of each structure in an image including a plurality of structures is known. For example, WO2021/015232A discloses a technology for extracting and separating an artery region and a vein region as a graph structure from a medical image including a blood vessel.

In the above-described technique, the extraction accuracy is improved by extracting the graph structure using a topological distance, but there is room for improvement in the separation of the plurality of structures.

SUMMARY

The present disclosure has been made in view of the above circumstances, and an object of the present disclosure is to provide an image processing apparatus, an image processing method, and a non-transitory computer-readable storage medium storing an image processing program that are capable of accurately separating a plurality of structures included in an image.

In order to achieve the above object, an image processing apparatus according to a first aspect of the present disclosure comprises a processor, in which the processor is configured to derive a feature vector for each pixel corresponding to a structure in an image including a plurality of structures, according to a topological distance between the pixels, assign energy to edges between the pixels based on the feature vector, and separate a region of the structure by cutting the edges such that a sum of energies of a plurality of the edges is minimized.

According to a second aspect of the present disclosure, in the image processing apparatus according to the first aspect, the processor is configured to derive the feature vector using a trained model that outputs the feature vector in a case in which images of the plurality of structures are input.

According to a third aspect of the present disclosure, in the image processing apparatus according to the second aspect, the trained model is a model that is trained to output a feature vector according to a topological distance by imposing a condition that a norm between feature vectors output between pixels belonging to the same structure is smaller than a norm between feature vectors output between pixels belonging to different structures.

According to a fourth aspect of the present disclosure, in the image processing apparatus according to the third aspect, the condition includes a condition that a norm between feature vectors output between pixels belonging to the same structure is smaller than a predetermined value and a norm between feature vectors output between pixels belonging to different structures is greater than the predetermined value.

According to a fifth aspect of the present disclosure, in the image processing apparatus according to the first aspect, the plurality of structures include an artery and a vein, and the processor is configured to separate the artery and the vein.

According to a sixth aspect of the present disclosure, in the image processing apparatus according to the first aspect, the structure includes any of a bronchus, a nerve, a muscle fiber, or a lymphatic vessel.

In addition, in order to achieve the above object, an image processing method according to a seventh aspect of the present disclosure comprises deriving a feature vector for each pixel corresponding to a structure in an image including a plurality of structures, according to a topological distance between the pixels, assigning energy to edges between the pixels based on the feature vector, and separating a region of the structure by cutting the edges such that a sum of energies of a plurality of the edges is minimized.

In addition, in order to achieve the above object, a non-transitory computer-readable storage medium stores a program that causes a computer to execute image processing comprising deriving a feature vector for each pixel corresponding to a structure in an image including a plurality of structures, according to a topological distance between the pixels, assigning energy to edges between the pixels based on the feature vector, and separating a region of the structure by cutting the edges such that a sum of energies of a plurality of the edges is minimized.

According to the present disclosure, it is possible to accurately separate a plurality of structures included in an image.

BRIEF DESCRIPTION OF THE DRAWINGS

FIG. 1 is a block diagram showing an example of a configuration of an image processing apparatus according to an embodiment.
FIG. 2 is a functional block diagram showing an example of a configuration of the image processing apparatus according to the embodiment.
FIG. 3 is a schematic diagram for describing a configuration of an example of an extraction model according to the embodiment.
FIG. 4 is a diagram for describing a topological distance.
FIGS. 5A to 5D are diagrams for describing training of the extraction model according to the embodiment.
FIG. 6A is a diagram for describing a case where nodes are present in the same blood vessel.
FIG. 6B is a diagram for describing a case where nodes are present in different blood vessels.
FIG. 7 is a diagram for describing processing of a derivation unit and a separation unit according to the embodiment.
FIG. 8 is a flowchart showing an example of a flow of image processing performed by the image processing apparatus according to the embodiment.

DETAILED DESCRIPTION

Hereinafter, an embodiment of the present disclosure will be described in detail with reference to the accompanying drawings. It should be noted that the present embodiment does not limit the technology of the present disclosure, the configuration, the operation, and the like are merely examples, and it is needless to say that the configuration, the operation, and the like can be changed according to the situation without departing from the spirit of the present disclosure.

An image processing apparatus according to the present embodiment is an apparatus that displays an image in which an artery and a vein of a blood vessel included in a medical image can be distinguished. The medical image according to the present embodiment is an example of an image including a plurality of structures of the present disclosure, and the artery and the vein according to the present embodiment are examples of the structures of the present disclosure.

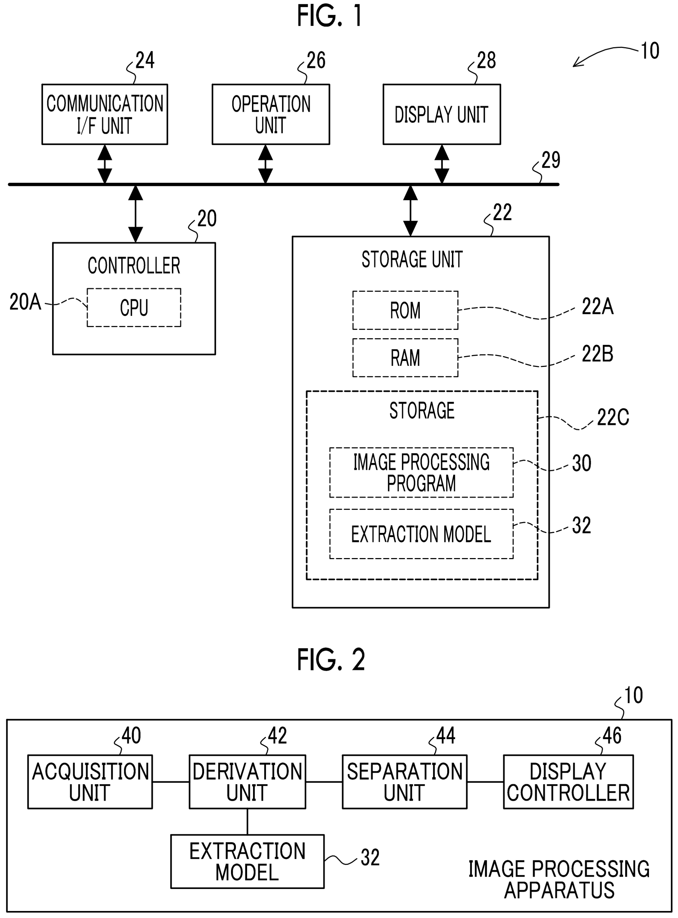

FIG. 1 is a block diagram showing an example of a configuration of an image processing apparatus 10 according to the present embodiment. As shown in FIG. 1, the image processing apparatus 10 according to the present embodiment comprises a controller 20, a storage unit 22, a communication interface (I/F) unit 24, an operation unit 26, and a display unit 28. The controller 20, the storage unit 22, the communication I/F unit 24, the operation unit 26, and the display unit 28 are connected to each other via a bus 29 such as a system bus or a control bus so that various types of information can be exchanged.

The controller 20 according to the present embodiment controls the overall operation of the image processing apparatus 10. The controller 20 is a processor, and comprises a central processing unit (CPU) 20A. In addition, the controller 20 is connected to the storage unit 22 which will be described below. The controller 20 may comprise a graphics processing unit (GPU).

The operation unit 26 is used by a user to input information related to image processing. The operation unit 26 is not particularly limited, and examples thereof include various switches, a touch panel, a touch pen, a mouse, and a microphone for audio input. The display unit 28 displays the separation result of a pulmonary artery region 54 and a pulmonary vein region 56, various types of information, and the like. The operation unit 26 and the display unit 28 may be integrated into a touch panel display.

The communication I/F unit 24 communicates various types of information with external devices of the image processing apparatus 10 via a network (not shown) by wireless communication or wired communication.

The storage unit 22 comprises a read only memory (ROM) 22A, a random access memory (RAM) 22B, and a storage 22C. Various programs and the like executed by a CPU 20A are stored in the ROM 22A in advance. Various data are transitorily stored in the RAM 22B. The storage 22C stores an image processing program 30 executed by the CPU 20A, various other types of information, and the like. In addition, the storage 22C according to the present embodiment stores in advance an extraction model 32 that receives an image of a blood vessel as an input and outputs a feature map representing a feature vector of each pixel, the details of which will be described below. The storage 22C is a non-volatile storage unit, and examples thereof include a hard disk drive (HDD) and a solid state drive (SSD).

In addition, FIG. 2 is a functional block diagram showing an example of a configuration of the image processing apparatus 10 according to the present embodiment. As shown in FIG. 2, the image processing apparatus 10 comprises an acquisition unit 40, a derivation unit 42, a separation unit 44, and a display controller 46. As an example, in the image processing apparatus 10 according to the present embodiment, the CPU 20A of the controller 20 executes the image processing program 30 stored in the storage 22C, so that the CPU 20A functions as the acquisition unit 40, the derivation unit 42, the separation unit 44, and the display controller 46.

The acquisition unit 40 acquires an image obtained by imaging a part of a subject, which is to be diagnosed, for example, a medical image captured by a computed tomography (CT) apparatus. As an example, in the present embodiment, the part to be diagnosed is the lung, and the medical image acquired by the acquisition unit 40 includes blood vessels of the lung of the subject. The blood vessels of the lung include the pulmonary artery and the pulmonary vein as two tubular structures. Here, the inclusion of the blood vessel in the medical image specifically means that the medical image includes an image in which the blood vessels of the subject are captured. In addition, the medical image according to the present embodiment is a three-dimensional image, and each pixel of the medical image is a voxel.

An acquisition source and a specific acquisition method by which the acquisition unit 40 acquires the medical image are not limited. As an example, in the present embodiment, identification information for identifying a patient is added to the medical images, and the acquisition unit 40 receives the identification information for identifying the patient and acquires the medical images corresponding to the identification information from an image database (not shown) in which a plurality of medical images are stored. The image database may be stored inside the image processing apparatus 10, for example, in the storage 22C, or may be stored in an apparatus outside the image processing apparatus 10. The acquisition unit 40 outputs the acquired medical image to the derivation unit 42.

The derivation unit 42 derives a feature vector according to a topological distance between pixels for each pixel corresponding to a blood vessel region in the medical image. As an example, the derivation unit 42 according to the present embodiment derives the feature vector by using the trained extraction model 32 that outputs the feature vector of each pixel in a case in which the image of the blood vessel including the pulmonary artery and the pulmonary vein is input.

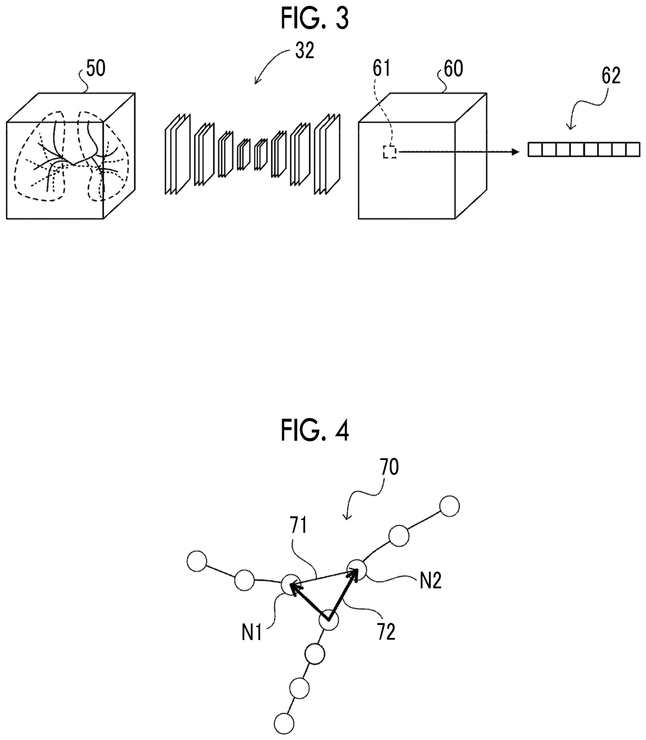

Here, the extraction model 32 will be described. FIG. 3 is a schematic diagram for describing a configuration of an example of the extraction model 32 according to the present embodiment. The extraction model 32 according to the present embodiment is a model having a network structure for estimating the segmentation of the medical image, and is a fully convolution network (FCN) or the like. In the present embodiment, since the medical image is a three-dimensional image, a neural network model with a three-dimensional (3D)-U-Net structure is used as the extraction model 32.

The extraction model 32 outputs a feature map 60 having an 8-dimensional feature vector 62 with the same size as an input medical image 50. The feature map 60 is a map in which a distance between the feature vectors 62 of nodes belonging to the same graph structure included in the input image is distributed in correspondence with a topological distance that is a distance on a path of the graph structure. That is, the distance between the feature vectors 62 is a topological distance between pixels 61 of the feature map 60, in other words, between the pixels of the medical image 50.

The "graph structure" refers to a linear structure in the tubular structure. Points that are present on the graph structure and constitute the graph structure are referred to as nodes. The tubular structure in the medical image 50 is a blood vessel, a bronchus, a nerve cell, or the like, and in a case in which the medical image 50 includes blood vessels of the lung as described above, the tubular structure is the blood vessel of the lung. The "topological distance" is a distance on the graph structure between the nodes in the same graph structure. FIG. 4 is a diagram for describing the topological distance. As shown in FIG. 4, a distance between two nodes N1 and N2 on a graph structure 70 having one branch is considered. The Euclidean distance between the two nodes N1 and N2 is a length of a straight line 71 connecting the two nodes N1 and N2. On the other hand, the topological distance between the two nodes N1 and N2 is a distance on a path of the graph structure 70. In a case of the graph structure 70 shown in FIG. 4, the length on the path of the graph structure 70 indicated by a thick line present between the node N1 and the node N2 is a topological distance 72 of the nodes N1 and N2.

An example of a learning method of the extraction model 32 will be described.

In a case of training the extraction model 32, first, as preliminary preparation, a plurality of graph data in which the center lines of the pulmonary artery and the pulmonary vein are traced are prepared as data for topological distance learning. Then, in order to perform the training as described above, the topological distance is calculated for each node on the center line in the training data, and neighboring positive nodes are extracted. In addition, another blood vessel in a predetermined range (for example, within 30 voxels) is specified, and the negative nodes are extracted.

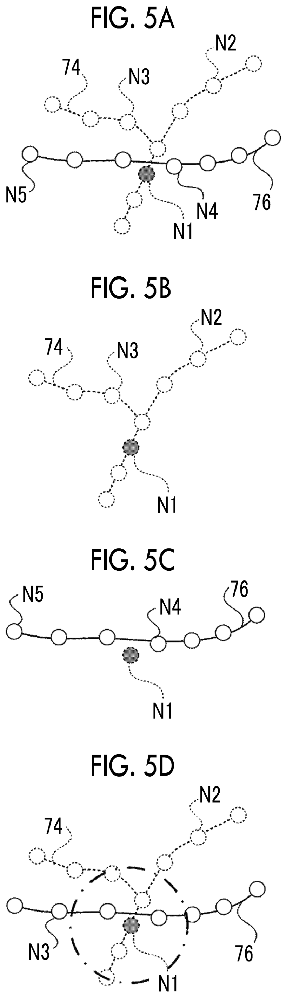

The training of the extraction model 32 will be described with reference to FIGS. 5A to 5D. As a basic policy, the training is performed such that the inter-feature distance between the nodes present on the same branch is reduced and the inter-feature distance between the nodes present on different branches is increased. For example, in the example shown in FIG. 5A, since each of the nodes N2 and N3 is present on the same branch 74 as the node N1, the training is performed such that the inter-feature distances between the node N1 and each of the nodes N2 and N3 are made close to each other. On the other hand, since each of nodes N4 and N5 is present in a different branch 76 from the node N1, the training is performed such that the inter-feature distances between the node N1 and each of the nodes N4 and N5 are increased.

In addition, in a pair of nodes (positive pair) present in the same branch, the training is performed such that the inter-feature distance between an anchor and a target is a path length. In the example shown in FIG. 5B, since the node N1, which is an anchor, and each of the nodes N2 and N3, which are targets, are positive pairs, the training is performed such that the inter-feature distances between the node N1 and each of the nodes N2 and N3 are the path lengths.

On the other hand, in a pair of nodes (negative pair) present in different branches, the training is performed such that the inter-feature distance between the anchor and the target is greater than a predetermined fixed value. In the example shown in FIG. 5C, since the node N1, which is an anchor, and each of the nodes N4 and N5, which are targets, are negative pairs, the training is performed such that the inter-feature distances between the node N1 and each of the nodes N4 and N5 are greater than a predetermined fixed value.

In addition, the training is stronger in the vicinity of the anchor. In the example shown in FIG. 5D, the training is strongly performed within a predetermined range indicated by a one-dot chain line centered on the node N1 which is an anchor. Specifically, the training is strongly performed for nodes within a predetermined number of voxels (for example, within 30 voxels) from the node N1.

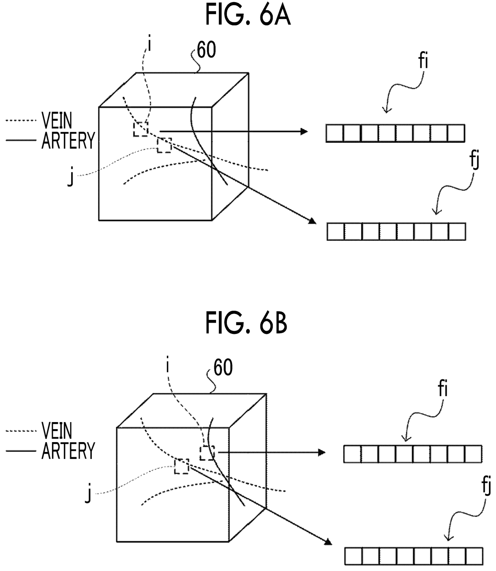

Further, a specific example of the above training will be described in detail with reference to FIGS. 6A and 6B. The extraction model 32 according to the present embodiment is trained to satisfy a condition that a norm between feature vectors output between the pixels belonging to the same structure is smaller than a norm between feature vectors output between the pixels belonging to different structures. In a case in which the feature vectors in the output images of the node pairs i and j of the center line graphs in the training data are fi and fj, respectively, the extraction model 32 is trained to satisfy the following expressions (1) and (2). It should be noted that "||" in Expression (1) and Expression (2) represents the norm (Euclidean distance). In addition, as described above, the pair of nodes is selected from a local region within the predetermined range (for example, within 30 voxels).

As shown in FIG. 6A, in a case in which any two pixels i and j extracted from the feature map 60 to be output are the same blood vessel tree, the training is performed to satisfy the following Expression (1).

$$|fi - fj| \propto Topological\_distance(i, j), and |fi - fj| < 1$$

$$\cdots(1)$$

That is, the training is performed such that the norm between the feature vectors output between pixels belonging to the same structure is smaller than 1. It should be noted that "1" of the present aspect is an example of a predetermined value of the present disclosure.

On the other hand, as shown in FIG. 6B, in a case in which any two pixels i and j extracted from the feature map 60 to be output belong to different blood vessel trees, the training is performed to satisfy the following Expression (2).

$$|fi - fj| > 2 \qquad \cdots(2)$$

That is, the training is performed such that the norm between the feature vectors output between pixels belonging to different structures is greater than 2. In the present aspect, the training is performed such that the norm between the feature vectors output between the pixels belonging to different structures is greater than 2. However, the present disclosure is not limited to 2, and the norm may be at least greater than the value of the norm between the feature vectors output between the pixels belonging to the same structure.

It should be noted that the above-described method is an example in which the topological distance is learned from the center line graph of the same region, but an aspect in which training is performed from an image representation instead of a graph can also be adopted. In this aspect, each pixel constituting the image is set as a node of a graph, and edges are assigned to an adjacent relationship between the pixels. For the same region (in the present embodiment, an artery or a vein) in the image, a distance obtained by tracing the edges of the graph of any two pixels is the topological distance, and the training is performed such that this distance is a norm of the feature amount.

The trained extraction model 32 trained in this way is stored in advance in the storage 22C of the image processing apparatus 10 as described above.

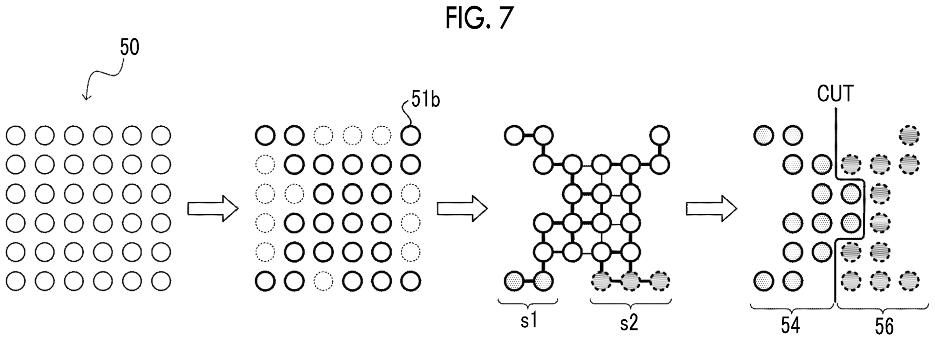

A flow of processing in the derivation unit 42 will be described with reference to FIG. 7. FIG. 7 shows an outline of a flow of processing performed by the derivation unit 42 and the separation unit 44.

First, the derivation unit 42 extracts the blood vessel region from the medical image 50 by segmentation or the like. In FIG. 7, pixels 51b indicated by a thick line of the medical image 50 indicate pixels corresponding to blood vessels, and a region defined by the pixel 51b is a blood vessel region. The method by which the derivation unit 42 extracts the blood vessel region from the medical image 50 is not limited, and for example, a known method can be used. Examples of the known method include a method of extracting the blood vessel region from the medical image 50 without distinguishing between the artery and the vein using a Hessian filter or the like. In addition, examples of a method of extracting the blood vessel region from volume data include a method described in "A. F. Frangi et al. Multiscale vessel enhancement filtering, Proceedings of MICCAI, 130-137, 1998".

The derivation unit 42 inputs a result of segmenting the blood vessel region to the extraction model 32 and acquires the feature map 60 output from the extraction model 32. Accordingly, the feature vectors of all the pixels of the blood vessel region in the medical image 50 are obtained.

The derivation unit 42 outputs, to the separation unit 44, the feature vector (feature map 60) of each pixel of the blood vessel region derived in this way.

The separation unit 44 separates the pulmonary artery region and the pulmonary vein region by assigning energy to edges between pixels based on the feature vectors derived by the derivation unit 42 and cutting the edges such that the sum of the energies of the plurality of edges is minimized.

First, as shown in FIG. 7, the separation unit 44 specifies positions of a seed s1 of the pulmonary artery and a seed s2 of the pulmonary vein. In the present embodiment, the seed s1 of the pulmonary artery is a main pulmonary artery extending from the pulmonary valve to the pulmonary hilum, and the seed s2 of the pulmonary vein is the left atrial region.

Next, the separation unit 44 assigns energy to edges between pixels based on the feature vectors and cuts the edges such that the sum of the energies of the plurality of edges is minimized. As an example, in the present embodiment, the segmentation is performed by a conditional random field (CRF), and a graph cut algorithm is applied to cut edges between pixels to separate a pulmonary artery region and a pulmonary vein region. Specifically, the energy function E(X) obtained by the following Expression (3) is minimized.

$$E(X) = \sum g(Xi) + \sum h_{ij}(Xi, Xj) \quad \cdots (3)$$

"g( )" in Expression (3) is a seed, and a weight is given to each of the seed s1 of the pulmonary artery and the seed s2 of the pulmonary vein.

"h( )" is an edge, and is set for each combination of adjacent pixels 51b for the segmented blood vessel region. The weights of the edges are given based on the similarity of the topological distance. Specifically, as shown in the following Expression (4), a greater weight is given as the similarity is higher.

$$h_{ij} \propto 1 - |fi - fj|^2 \quad \cdots (4)$$

The similarity of the nodes corresponds to the closeness of the topological distance. In a case in which the topological distance is small, |fi - fj| is a value close to "0", and hij takes a value of 1. On the other hand, as the topological distance increases, |fi - fj| is a value close to "1", and hij becomes smaller. The topological distance takes a value greater than 2 in a case of a node pair for different blood vessel trees. In addition to the L2 norm, the similarity between the feature vectors may be calculated using the L1 norm, the cosine similarity, or the like.

Instead of the above, a Fully Connected CRF that sets edges not only for combinations of adjacent pixels 51b but also for combinations of all the pixels 51b may be performed.

The separation unit 44 separates the pulmonary artery region 54 and the pulmonary vein region 56, as shown in FIG. 7, by cutting the edge to minimize the energy function E(X) obtained by Expression (3). The separation unit 44 outputs the separation result to the display controller 46.

The display controller 46 performs control to display the separation result obtained by the separation unit 44 on the display unit 28. The pulmonary artery region 54 and the pulmonary vein region 56 are displayed on the display unit 28 in an identifiable manner. Since the medical image 50 according to the present embodiment is a three-dimensional image, the display unit 28 displays a three-dimensional projected image by a predetermined method such as volume rendering. The method by which the display controller 46 displays the pulmonary artery region 54 and the pulmonary vein region 56, that is, the pulmonary artery and the pulmonary vein is not limited. For example, the pixels of the pulmonary artery region 54 and the pixels of the pulmonary vein region 56 may be displayed in different colors, or only one of the pixels of the pulmonary artery region 54 and the pixels of the pulmonary vein region 56 may be colorized and displayed. The pulmonary artery region 54 and the pulmonary vein region 56 may be displayed as the same image or may be displayed as different images. In the present embodiment, the aspect in which the image is displayed on the display unit 28 has been described, but an aspect in which the image is displayed on a display device other than the display unit 28, such as an external display device of the image processing apparatus 10, may also be adopted. In addition, the separation result of the separation unit 44, for example, an image in which each of the pulmonary artery region 54 and the pulmonary vein region 56 has been segmented, may be stored.

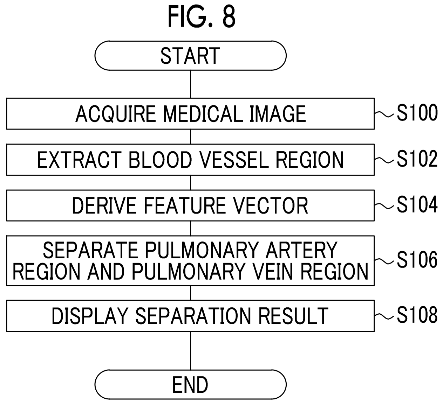

Next, an action of the image processing apparatus 10 according to the present embodiment will be described with reference to the drawings. FIG. 8 shows a flowchart showing an example of a flow of image processing executed in the image processing apparatus 10 according to the present embodiment. The image processing apparatus 10 according to the present embodiment executes image processing shown in FIG. 8 by the CPU 20A of the controller 20 executing the image processing program 30 stored in the storage 22C, based on a generation instruction or the like of the user performed via the operation unit 26 as an example.

In step S100 of FIG. 8, the acquisition unit 40 acquires the medical image 50. As described above, the acquisition unit 40 according to the present embodiment acquires the three-dimensional medical image 50 in which the lung to be diagnosed is imaged by using the CT apparatus.

In the next step S102, as described above, the derivation unit 42 extracts the blood vessel region from the medical image 50 by the segmentation.

In the next step S104, the derivation unit 42 derives the feature vector of the blood vessel region. As described above, the derivation unit 42 according to the present embodiment inputs the result of segmenting the blood vessel region to the extraction model 32 and acquires the feature map 60 output from the extraction model 32, thereby deriving the feature vector.

In the next step S106, the separation unit 44 separates the pulmonary artery region 54 and the pulmonary vein region 56. As described above, the separation unit 44 according to the present embodiment separates the pulmonary artery region 54 and the pulmonary vein region 56 by cutting the edge of the pixel 51b to minimize the energy function E(X) of Expression (3).

In the next step S108, the display controller 46 displays the separation result on the display unit 28 as described above. In a case in which the processing of step S108 ends, the image processing shown in FIG. 8 ends.

As described above, the image processing apparatus 10 according to the above embodiment comprises the derivation unit 42 and the separation unit 44. The derivation unit 42 derives a feature vector according to a topological distance between pixels for each pixel corresponding to the artery and the vein (blood vessel) of the medical image including the artery and the vein. The separation unit 44 separates an artery region and a vein region by assigning energy to edges between pixels based on the feature vectors and cutting the edges such that the sum of the energies of the plurality of edges is minimized.

As described above, the image processing apparatus 10 according to the above embodiment separates the artery region and the vein region by, for example, cutting the edge by graph cut according to the energy assigned based on the feature vector, based on the feature vector of the pixel. Therefore, with the image processing apparatus 10 according to the above embodiment, it is possible to accurately separate a plurality of structures included in the image.

In the above embodiment, the aspect in which the topological distance is used as the distance between the feature vectors has been described, but an aspect in which an inner product of vectors, a cosine distance, or the like is used may be adopted.

In addition, in the above embodiment, the aspect in which the regions are separated by the graph cut has been described, but for example, an aspect in which the regions are separated by applying a mean field approximation algorithm may be adopted. A method of deriving the mean field approximation using a recurrent neural network is known.

In addition, in the above embodiment, the aspect in which the pulmonary artery region 54 and the pulmonary vein region 56 are separated from the medical image 50 has been described, but the present disclosure is not limited to this aspect. For example, an aspect in which an artery region and a vein region are separated for blood vessels of a part other than the lung may be adopted. In addition, for example, an aspect of separating a region of a lymphatic vessel from a region of a blood vessel, an aspect of separating a region of a ureter from a region of a vas deferens or a region of a fallopian tube, an aspect of separating a bronchus, an aspect of separating muscle fibers, an aspect of separating nerve fibers, and the like may be adopted. In addition, the structure is not limited to an anatomical structure, that is, a structure belonging to a living organism, and may be, for example, an aspect in which a region of an expressway and a region of a general road are separated, or an aspect in which an outbound route and an inbound region of an expressway are separated.

In addition, in the present embodiment, each processing is executed by any computer. In addition, any computer may execute these types of processing by a processor as hardware, a program as software, or a combination thereof. In such a case, the processor is configured to execute various types of processing in the present embodiment in cooperation with the program, and may function as each unit or each means in the present embodiment. In addition, the execution order of the processing by the processor is not limited to the above order and may be changed as appropriate. Any computer may be a general-purpose computer, a computer for a specific application, a workstation, or another system capable of executing each processing.

The processor may be composed of one or a plurality of pieces of hardware, and types of hardware are not limited. For example, the processor may be composed of hardware such as a central processing unit (CPU), a micro processing unit (MPU), a programmable logic device such as a field programmable gate array (FPGA), a dedicated circuit for executing specific processing, such as an application specific integrated circuit (ASIC), a graphic processing unit (GPU), or a neural processing unit (NPU). Furthermore, the types of hardware may be a combination of different types of hardware. In a case in which the plurality of types of hardware are configured to execute one or a plurality of types of processing of a certain processor, the plurality of types of hardware may be present in devices physically separated from each other or may be present in the same device. Furthermore, in any of the embodiments, the order of each processing performed by the processor is not limited to the above order, and may be changed as appropriate. The hardware is composed of an electric circuit (circuitry) in which circuit elements such as semiconductor elements are combined.

Further, the program may be software, such as firmware or a microcode. Furthermore, the program may be, for example, a program module group, and each function thereof may be implemented by a processor configured to execute each function. The program may be a program code or a plurality of code segments stored in one or a plurality of non-transitory computer-readable media (for example, a storage medium and other storages). The program may be divided and stored in a plurality of non-transitory computer-readable media present in apparatuses physically separated from each other. The program code or the code segment may represent any combination of procedures, functions, subprograms, routines, subroutines, modules, software packages, classes, instructions, data structures, or program statements. The program code or the code segment may be connected to another code segment or a hardware circuit by transmitting and receiving information, data, an argument, a parameter, or contents of a memory.

In addition, in the above embodiments, the aspect in which the image processing program 30 is stored (installed) in advance in the storage 22C of the storage unit 22 has been described, but the present disclosure is not limited thereto. The image processing program 30 may be provided in a form recorded in a recording medium, such as a compact disc read-only memory (CD-ROM), a digital versatile disc read-only memory (DVD-ROM), and a universal serial bus (USB) memory. In addition, the image processing program 30 may be downloaded from an external device via a network.

In addition, the technology of the present disclosure extends to all program products. The program product includes all forms of products for providing a program. For example, the program product includes a program provided through a network such as the Internet, and non-transitory computer-readable recording media such as a CD-ROM, a DVD, and a USB memory in which the program is stored.

In regard to the embodiment described above, the following supplementary notes will be further disclosed.

Supplementary Note 1

An image processing apparatus comprising: a processor, in which the processor is configured to: derive a feature vector for each pixel corresponding to a structure in an image including a plurality of structures, according to a topological distance between the pixels; assign energy to edges between the pixels based on the feature vector; and separate a region of the structure by cutting the edges such that a sum of energies of a plurality of the edges is minimized.

Supplementary Note 2

The image processing apparatus according to Supplementary Note 1, in which the processor is configured to derive the feature vector using a trained model that outputs the feature vector in a case in which images of the plurality of structures are input.

Supplementary Note 3

The image processing apparatus according to Supplementary Note 2, in which the trained model is a model that is trained to output a feature vector according to a topological distance by imposing a condition that a norm between feature vectors output between pixels belonging to the same structure is smaller than a norm between feature vectors output between pixels belonging to different structures.

Supplementary Note 4

The image processing apparatus according to Supplementary Note 3, in which the condition includes a condition that a norm between feature vectors output between pixels belonging to the same structure is smaller than a predetermined value and a norm between feature vectors output between pixels belonging to different structures is greater than the predetermined value.

Supplementary Note 5

The image processing apparatus according to any one of Supplementary Notes 1 to 4, in which the plurality of structures include an artery and a vein, and the processor is configured to separate the artery and the vein.

Supplementary Note 6

The image processing apparatus according to any one of Supplementary Notes 1 to 4, in which the structure includes any of a bronchus, a nerve, a muscle fiber, or a lymphatic vessel.

Supplementary Note 7

An image processing method comprising: deriving a feature vector for each pixel corresponding to a structure in an image including a plurality of structures, according to a topological distance between the pixels; assigning energy to edges between the pixels based on the feature vector; and separating a region of the structure by cutting the edges such that a sum of energies of a plurality of the edges is minimized.

Supplementary Note 8

An image processing program causing a computer to execute processing comprising: deriving a feature vector for each pixel corresponding to a structure in an image including a plurality of structures, according to a topological distance between the pixels; assigning energy to edges between the pixels based on the feature vector; and separating a region of the structure by cutting the edges such that a sum of energies of a plurality of the edges is minimized.

Supplementary Note 9

A computer program product comprising an image processing program causing a processor to execute processing comprising: deriving a feature vector for each pixel corresponding to a structure in an image including a plurality of structures, according to a topological distance between the pixels; assigning energy to edges between the pixels based on the feature vector; and separating a region of the structure by cutting the edges such that a sum of energies of a plurality of the edges is minimized.

Supplementary Note 10

A computer-readable storage medium storing an image processing program that causes a processor to: derive a feature vector for each pixel corresponding to a structure in an image including a plurality of structures, according to a topological distance between the pixels; assign energy to edges between the pixels based on the feature vector; and separate a region of the structure by cutting the edges such that a sum of energies of a plurality of the edges is minimized.

**Claims**

1.  An image processing apparatus comprising:

    a processor,
    wherein the processor is configured to:

    derive a feature vector for each pixel corresponding to a structure in an image including a plurality of structures, according to a topological distance between the pixels;
    assign energy to edges between the pixels based on the feature vector; and
    separate a region of the structure by cutting the edges such that a sum of energies of a plurality of the edges is minimized.

2.  The image processing apparatus according to claim 1,
    wherein the processor is configured to derive the feature vector using a trained model that outputs the feature vector in a case in which images of the plurality of structures are input.

3.  The image processing apparatus according to claim 2,
    wherein the trained model is a model that is trained to output a feature vector according to a topological distance by imposing a condition that a norm between feature vectors output between pixels belonging to the same structure is smaller than a norm between feature vectors output between pixels belonging to different structures.

4.  The image processing apparatus according to claim 3,
    wherein the condition includes a condition that a norm between feature vectors output between pixels belonging to the same structure is smaller than a predetermined value and a norm between feature vectors output between pixels belonging to different structures is greater than the predetermined value.

5.  The image processing apparatus according to any one of claims 1 to 4,

wherein the plurality of structures include an artery and a vein, and
the processor is configured to separate the artery and the vein.

6. The image processing apparatus according to any one of claims 1 to 5,
wherein the structure includes any of a bronchus, a nerve, a muscle fiber, or a lymphatic vessel.

7. An image processing method comprising:

deriving a feature vector for each pixel corresponding to a structure in an image including a plurality of structures, according to a topological distance between the pixels;
assigning energy to edges between the pixels based on the feature vector; and
separating a region of the structure by cutting the edges such that a sum of energies of a plurality of the edges is minimized.

8. A non-transitory computer-readable storage medium storing a program that causes a computer to execute image processing, the image processing comprising:

deriving a feature vector for each pixel corresponding to a structure in an image including a plurality of structures, according to a topological distance between the pixels;
assigning energy to edges between the pixels based on the feature vector; and
separating a region of the structure by cutting the edges such that a sum of energies of a plurality of the edges is minimized.

## FIG. 1

## FIG. 2

FIG. 3

FIG. 4

## FIG. 5A

## FIG. 5B

## FIG. 5C

## FIG. 5D

## FIG. 6A

## FIG. 6B

FIG. 7

# FIG. 8

START

ACQUIRE MEDICAL IMAGE — S100

EXTRACT BLOOD VESSEL REGION — S102

DERIVE FEATURE VECTOR — S104

SEPARATE PULMONARY ARTERY
REGION AND PULMONARY VEIN REGION — S106

DISPLAY SEPARATION RESULT — S108

END

EUROPEAN SEARCH REPORT

Application Number

EP 25 21 0930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M NGOC ET AL: "The Dahu graph-cut for interactive segmentation on 2D/3D images", PATTERN RECOGNITION., vol. 136, 1 April 2023 (2023-04-01), page 109207, XP093372039, GB ISSN: 0031-3203, DOI: 10.1016/j.patcog.2022.109207 | 1,7,8 | INV. G06T7/12 G06T7/162 |
| Y | * abstract * | 5,6 | |
| A | * sections 1-3 * * sections 4.2, 4.3, 4.4 * * figures 6, 14, 15 * ----- | 2-4 | |
| X | NARDELLI PIETRO ET AL: "Pulmonary Artery-Vein Classification in CT Images Using Deep Learning", IEEE TRANSACTIONS ON MEDICAL IMAGING, IEEE, USA, vol. 37, no. 11, 1 November 2018 (2018-11-01), pages 2428-2440, XP011693847, ISSN: 0278-0062, DOI: 10.1109/TMI.2018.2833385 [retrieved on 2018-10-29] | 1,5-8 | |
| | | | TECHNICAL FIELDS SEARCHED (IPC) |
| | | | G06T |
| A | * abstract * * section II * * figures 1, 2 * ----- | 2-4 | |
| Y | US 2022/148286 A1 (KESHWANI DEEPAK [JP]) 12 May 2022 (2022-05-12) | 5,6 | |
| A | * abstract * * paragraph [0008] * * paragraph [0014] - paragraph [0016] * * paragraph [0053] * * paragraph [0056] * * paragraph [0064] - paragraph [0065] * * figures 2-8 * ----- | 1-4,7,8 | |

The present search report has been drawn up for all claims

| Place of search | Date of completion of the search | Examiner |
|---|---|---|
| Munich | 6 March 2026 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0930

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | Publication date | Patent family member(s) | | Publication date |
|---|---|---|---|---|
| US 2022148286 A1 | 12-05-2022 | EP | 4005487 A1 | 01-06-2022 |
| | | JP | 7261884 B2 | 20-04-2023 |
| | | JP | WO2021015232 A1 | 28-01-2021 |
| | | US | 2022148286 A1 | 12-05-2022 |
| | | WO | 2021015232 A1 | 28-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021015232 A

**Non-patent literature cited in the description**

- **A. F. FRANGI et al.** Multiscale vessel enhancement filtering. *Proceedings of MICCAI*, 1998, 130-137